Europäisches Patentamt

European Patent Office

Office européen des brevets

(11) Publication number: **0 080 513**
**B1**

# EUROPEAN PATENT SPECIFICATION

(45) Date of publication of patent specification: **09.11.88**

(21) Application number: **82901730.0**

(22) Date of filing: **04.06.82**

(86) International application number:
**PCT/JP82/00220**

(87) International publication number:
**WO 82/04213 09.12.82 Gazette 82/29**

(51) Int. Cl.⁴: **B 23 Q 33/00**

(54) COPY CONTROL SYSTEM.

(30) Priority: **08.06.81 JP 87621/81**

(43) Date of publication of application:
**08.06.83 Bulletin 83/23**

(45) Publication of the grant of the patent:
**09.11.88 Bulletin 88/45**

(84) Designated Contracting States:
**DE FR GB**

(56) References cited:
**EP-A-0 026 630**
**JP-A-54 140 280**
**JP-A-55 018 337**
**JP-A-56 052 159**

(73) Proprietor: **FANUC LTD**
**3580, Shibokusa Aza-Komanba Oshino-mura**
**Minamitsuru-gun Yamanashi 401-05 (JP)**

(72) Inventor: **MATSUURA, Hitoshi**
**1-406 Keioyamada Mansion 412-7 Midori-cho**
**Hachioji-shi Tokyo 193 (JP)**
Inventor: **YAMAZAKI, Etuo**
**566-93, Shimoongata-cho Hachioji-shi**
**Tokyo 192-01 (JP)**
Inventor: **SAKURAI, Hiroshi**
**3-27, Tamadaira**
**Hino-shi Tokyo 191 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a copy control system which is capable of preventing or reducing decrease in cutting accuracy at a point of sudden change in the profile of a model being traced.

In tracing, when a point of sudden change in the configuration of a model being traced, such as a corner portion or the like, is traced at the same tracing speed as that for other portions, biting of a cutter into a workpiece or similar trouble occurs, resulting in lowered cutting accuracy. It is general practice in the prior art to stick a potential wire on a model of an insulating material in the vicinity of a sudden-change point of its configuration. When a metallic stylus makes contact with the potential wire to form a closed circuit, deceleration control is performed, thereby to prevent or reduce lowering of cutting accuracy at the sudden-change point of the model configuration.

This method however has the following defects because of the necessity of sticking the potential wire on the model.

(1) Since the potential wire has a finite thickness, the model surface on which the potential wire is stuck cannot be traced accurately.

(2) Sticking-on the potential wire introduces the possibility of the model being damaged or stained.

(3) Since the stylus slides directly on the potential wire, it is feared that inaccurate deceleration control may be produced owing to bad contact.

JP—A—55/18337 discloses a copy control system which performs tracing of a point of sudden change in the profile of a model at a tracing speed reduced in a deceleration region before the sudden-change point, comprising a control unit, a memory having prestored therein coordinates in three dimensions X, Y and Z indicating a deceleration region, and X, Y and Z axis position detecting means enabling tracing to be controlled in dependence upon a comparison between stored and detected tracing coordinate values, the control unit being operable to perform tracing passes parallel to the XZ plane thereby to have a constant Y coordinate throughout each pass, and to evaluate the X and Z coordinates of a deceleration region during a tracing pass in dependence upon the detected Y coordinate of the tracing pass. The deceleration region is split-up into finite sub-regions in the Y-axis direction, and deceleration produced in each sub-region is dealt-with using constant X and Z coordinate values stored for that particular sub-region. Thus within a sub-region accuracy is restricted according to the size of the sub-region, and can only be increased by reducing the sizes of the sub-regions, thereby increasing their number and necessitating the provision of even larger memories.

According to the present invention there is provided a copy control system which performs tracing of a point of sudden change in the profile of a model at a tracing speed reduced in a deceleration region before the sudden-change point, comprising a control unit, a memory having prestored therein coordinates in three dimensions X, Y and Z indicating a deceleration region, and X, Y and Z axis position detecting means enabling tracing to be controlled in dependence upon a comparison between stored and detected tracing coordinate values, the control unit being operable to perform tracing passes parallel to the XZ plane thereby to have a constant Y coordinate throughout each pass, and to evaluate the X and Z coordinates of a deceleration region during the tracing pass in dependence upon the detected Y coordinate of the tracing pass, characterised in that in the memory there are stored a predefinable number of deceleration regions each associated with respective elongate edges of a model at which the profile suddenly changes, each such deceleration region being defined between parallel planes perpendicular to the XY plane and parallel planes perpendicular to the YZ plane, the respective deceleration regions being defined in the memory by the X and Z coordinates of boundary points of these regions corresponding to predetermined Y coordinate values, and wherein at each tracing pass having a detected Y coordinate value which lies between two of the predetermined Y coordinates corresponding to stored boundary points for one of the deceleration regions stored in the memory, the control until will provide for that pass X and Z coordinates, defining a deceleration portion of that pass, by interpolating between respective X and respective Z coordinates for each boundary of the deceleration region in which that pass is taking place, using as the basis for each interpolation calculation the position of the detected Y coordinate of that pass relative to the difference beween the two predetermined Y coordinates between which it lies.

For a better understanding of the present invention, and to show how it may be put into effect, reference will now be made by way of example to the accompanying drawings in which:

Figure 1 is a block diagram illustrating an embodiment of the present invention;

Figure 2 is a diagram explanatory of deceleration regions; and

Figure 3 is a diagram explanatory of stored contents of a memory.

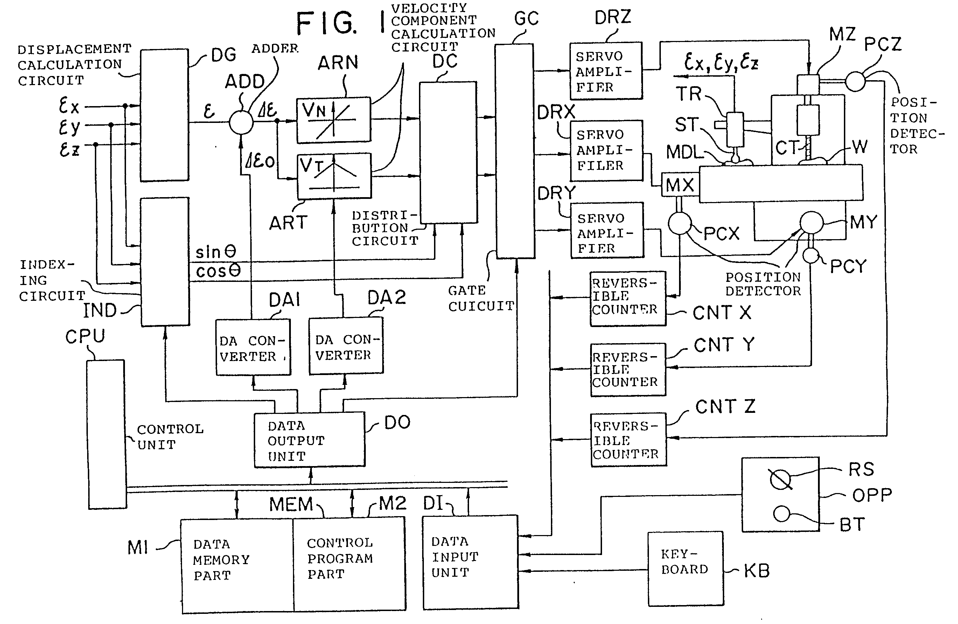

Figure 1 is a block diagram illustrating an example of apparatus embodying the system of the present invention. Reference character DG indicates a displacement calculation circuit; IND designates an indexing circuit; ARN and ART identify velocity component calculation circuits; ADD denotes an adder; DC represents a distribution circuit; GC shows a gate circuit; DRX, DRY and DRZ refer to servo amplifiers; MX, MY and MZ signify motors; PCX, PCY and PCZ indicate position detectors; TR designates a tracer head; ST identifies a stylus; MDL denotes a model; W represents a workpiece; CT shows a cutter; DA1 and DA2 refer to DA converters; CNTX, CNTY and CNTZ signify reversible counters for counting pulses from the position detectors PCX, PXY and PCZ to indicate the current position; OPP identifies an operator panel; RS denotes a speed or like setting dial; BT represents a push button; KB shows a keyboard; DI refers to a data input unit; DO signifies a data output unit; MEM indicates a memory comprising a data memory part M1 and a control program part M2; and CPU designates a control unit.

The stylus ST is brought into contact with the model MDL and fed by the motors MX, MY, MZ and displacement signals $\varepsilon_x$, $\varepsilon_y$ and $\varepsilon_z$ corresponding to the displacement of the stylus ST are provided from the tracer head TR. Based on the displacement signals $\varepsilon_x$, $\varepsilon_y$ and $\varepsilon_z$, the displacement calculation circuit DG produces a composite displacement signal

$$\varepsilon = \sqrt{\varepsilon_x^2 + \varepsilon_y^2 + \varepsilon_z^2}$$

and the indexing circuit IND produces displacement-direction signals $\sin\theta$ and $\cos\theta$. The composite displacement signal $\varepsilon$ is applied to the adder ADD, wherein a difference $\Delta\varepsilon$ between it and a reference displacement signal $\varepsilon_0$ is obtained. In the velocity calculation circuits ARN and ART are obtained normal velocity $V_N$ and tangential velocity $V_T$. In the distribution circuit DC a velocity command signal is produced based on the displacement-direction signals $\sin\theta$ and $\cos\theta$, and the velocity command signal is provided to that one of the servo amplifiers selected by the gate circuit GC. By the resulting amplified output the corresponding motor is driven, bodily feeding the cutter CT and the stylus ST. Since the above-described operation is well-known as copy control, no further detailed description will be given.

The memory MEM has stored therein data on a region where to perform deceleration control (hereinafter referred to as the deceleration region) in addition to data on the mode, trace direction, trace speed, pick feed direction, pick feed value, pick feed speed and trace return position of each of two-way tracing, one-way tracing and contour tracing.

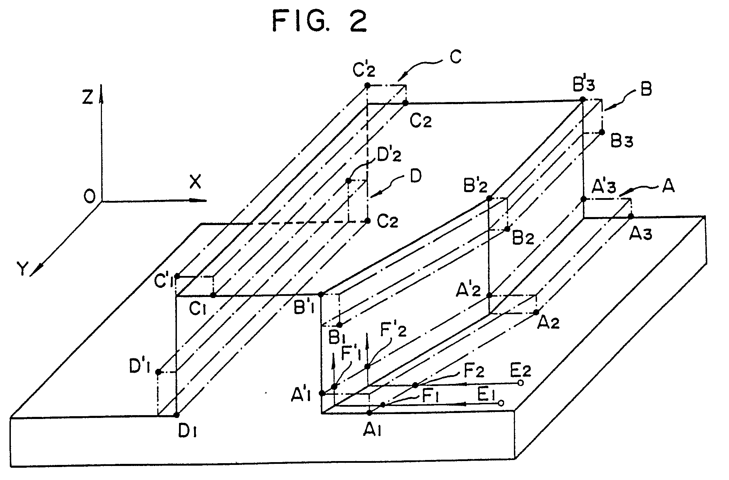

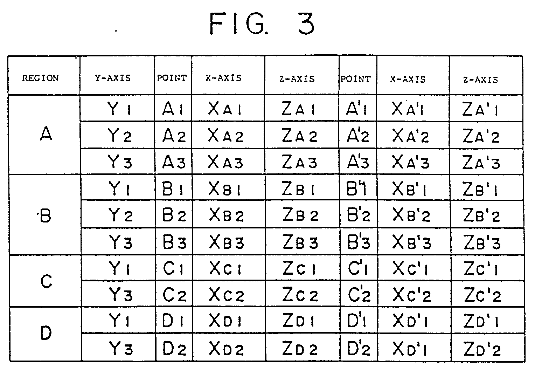

Now, consider, for example, the case of one-way tracing of a model shown in Figure 2. In Figure 2 portions surrounded by the one-dot chain lines are deceleration regions A to D, each of which is defined by two parallel planes perpendicular to the XY plane and two parallel planes perpendicular to the YZ plane. In the memory MEM are prestored, for the deceleration regions A to D, the X, Y and Z coordinates of points $A_1$ to $A_3$, $A'_1$ to $A'_3$, $B_1$ to $B_3$, $B'_1$ to $B'_3$, $C_1$, $C_2$, $C'_1$, $C'_2$, $D_1$, $D_2$, $D'_1$ and $D'_2$ on the basis of the Y coordinates in the case of the direction of tracing being the X-axis direction, as shown in Figure 3. Incidentally the Y coordinates of the points $A_1$, $A'_1$, $B_1$, $B'_1$, $C_1$, $C'_1$, $D_1$ and $D'_1$ are all $Y_1$; the Y coordinates of the points $A_2$, $A'_2$, $B_2$ and $B'_2$ are all $Y_2$; and the Y coordinates of the points $A_3$, $A'_3$, $B_3$, $B'_3$, $C_2$, $C'_2$, $D_2$ and $D'_2$ are all $Y_3$. In this case, $Y_1 < Y_2 < Y_3$, $X_{A'i} < X_{Ai}$, $X_{B'i} < X_{Bi}$, $X_{C'i} < X_{Ci}$, $X_{D'i} < X_{Di}$, $Z_{Ai} < Z_{A'i}$, $Z_{Bi} < Z_{B'i}$, $Z_{Ci} < Z_{C'i}$ and $Z_{Di} < Z_{D'i}$ (where i= 1, 2, 3).

The data input method used is as follows: in the case where the coordinate value of each point is known, it is input from the keyboard KB via the data input unit DI and, in the case where the coordinate value of each point is unknown, the stylus ST is moved to the position of each point and the push button BT is pressed to store the coordinate value of each point in the memory MEM. In the case of pressing the push button BT to store the coordinate value of each point, the control unit CPU reads thereinto count values of the reversible counters CNTX, CNTY and CNTZ at the time of the push button BT being pressed and stores the count value as the coordinate value of each point in the memory MEM as shown in Figure 3.

Now, when starting the one-way tracing from a point $E_1$ in Figure 2 along the X-axis in a direction of the arrow, the control unit CPU reads thereinto a count value $Y_{CNT}$ of the reversible counter CNTY and compares the count value $Y_{CNT}$ and the Y coordinates $Y_1$, $Y_2$ and $Y_3$ stored in an area of the memory MEM corresponding to the deceleration region A to obtain that one of the Y coordinates larger than the count value $Y_{CNT}$ which is the closest thereto and that one of the Y coordinates smaller than the count value $Y_{CNT}$ which is the closest thereto, and the control unit stored such Y coordinates. In this case, since $Y_1 < Y_{CNT} < Y_2$, the control unit CPU stores the Y coordinates $Y_1$ and $Y_2$.

Next, the control unit CPU reads thereinto the X coordinates $X_{A1}$ and $X_{A'1}$ and the Z coordinates $Z_{A1}$ and $Z_{A'1}$ of the points $A_1$ and $A'_1$ stored in the memory MEM on the basis of the Y coordinates $Y_1$ and the X coordinates $X_{A2}$ and $X_{A'2}$ and the Z coordinates $Z_{A2}$ and $Z_{A'2}$ of the points $A_2$ and $A'_2$ stored in the memory MEM on the basis of the Y coordinates $Y_2$. Then the control unit CPU performs data interpolation by computations of the following expressions (1) to (4), obtaining the X coordinates $X_{F1}$ and $X_{F'1}$ and the Z coordinates $Z_{F1}$ and $Z_{F'1}$ of the points $F_1$ and $F'_1$.

$$X_{F1} = X_{A1} + \frac{(X_{A2} - X_{A1})(Y_{CNT} - Y_1)}{Y_2 - Y_1} \quad (1)$$

$$X_{F'1} = X_{A'1} + \frac{(X_{A'2} - X_{A'1})(Y_{CNT} - Y_1)}{Y_2 - Y_1} \quad (2)$$

$$Z_{F1} = Z_{A1} + \frac{(Z_{A2} - Z_{A1})(Y_{CNT} - Y_1)}{Y_2 - Y_1} \quad (3)$$

$$Z_{F'1} = Z_{A'1} + \frac{(Z_{A'2} - Z_{A'1})(Y_{CNT} - Y_1)}{Y_2 - Y_1} \quad (4)$$

After obtaining the X coordinates $X_{F1}$ and $X_{F'1}$ and the Z coordinates $Z_{F1}$ and $Z_{F'1}$ of the points $F_1$ and $F'_1$, the control unit CPU stores them and sequentially compares them with count values $X_{CNT}$ and $Z_{CNT}$ which are provided from the reversible counters CNTX and CNTZ via the data input unit DI. And when the count values $X_{CNT}$ and $Z_{CNT}$ satisfy the conditions given by the following expressions (5) and (6), respectively, the control unit CPU recognises it as indicating the deceleration region and applies a deceleration command via the data output unit DO and the DA converter DA2 to the velocity component calculation circuit ART, causing a decrease in the tracing feed speed.

$$X_{F'1} < X_{CNT} < X_{F1} \qquad (5)$$

$$Z_{F1} < Z_{CNT} < Z_{F'1} \qquad (6)$$

When the deceleration region A defined by the points $A_1$, $A_2$, $A'_1$ and $A'_2$ has been passed, that is, when the count values $X_{CNT}$ and $Z_{CNT}$ no more satisfy the conditions given by expressions (5) and (6), the control unit CPU stops outputting of the deceleration command. Then, in the same manner as described above, the control unit interpolates data of the points $B_1$ and $B'_1$ and the points $B_2$ and $B'_2$ on the basis of the data stored in the area of the memory MEM corresponding to the deceleration region B, sequentially compares the interpolated data with the count values $X_{CNT}$ and $Z_{CNT}$ of the reversible counters CNTX and CNTZ to decide whether the region being currently traced is the deceleration region and, if so, outputs the deceleration command as is the case with the foregoing. Also in connection with the deceleration regions C and D defined by the points $C_1$, $C_2$, $C'_1$ and $C'_2$ and the points $D_1$, $D_2$, $D'_1$ and $D'_2$, respectively, the interpolation of data and the comparison of the interpolated data with the count values $X_{CNT}$ and $Z_{CNT}$ are similarly performed and the deceleration command is output on the basis of the comparison results.

And, when tracing is started again from a point $E_2$ after a pick feed, the control unit CPU reads the count value $Y_{CNT}$ of the reversible counter CNTY, interpolates data representing the deceleration region on the basis of the count values, sequentially compares the interpolated data with the count values $X_{CNT}$ and $Z_{CNT}$ and outputs the deceleration command on the basis of the comparison results in the same manner as described previously.

As has been described in the foregoing, there is provided a memory having prestored data representing the deceleration regions, and X-axis, Y-axis and Z-axis position detecting means provided by the position detectors PCX, PCY and PCZ and reversible counters CNTX, CNTY and CNTZ. The control unit CPU interpolates the data representing the deceleration region on the basis of the result of detection by the Y-axis position detecting means, sequentially compares the interpolated data with the results of detection by the X-axis and Z-axis position detecting means, and performs deceleration control on the basis of the comparison results. The present invention does not require sticking of a potential wire on the model, unlike in the prior art system, and hence has the advantage that the cutting accuracy can be raised. Furthermore, since the present invention interpolates the data representing the deceleration region, the invention is advantageous in that the capacity of the memory used can be reduced, and that an error can be decreased.

It will be appreciated that the rectangular coordinate system X, Y, Z used hereinbefore and also in the following claim need not necessarily be in its shown orientation for all embodiments of the invention. Thus, for example, in an embodiment in which the tracing passes are made in a direction at right angles to that described for Figure 2, the shown X and Y axes of the XYZ system would be interchanged.

**Claim**

A copy control system which performs tracing of a point of sudden change in the profile of a model at a tracing speed reduced in a deceleration region before the sudden-change point, comprising a control unit (CPU), a memory (MEM) having prestored therein coordinates in three dimensions X, Y and Z indicating a deceleration region, and X, Y and Z axis position detecting means (PCX, PCY, PCZ) enabling tracing to be controlled in dependence upon a comparison between stored and detected tracing coordinate values, the control unit being operable to perform tracing passes parallel to the XZ plane thereby to have a constant Y coordinate throughout each pass, and to evaluate the X and Z coordinates of a deceleration region during a tracing pass in dependence upon the detected Y coordinate of the tracing pass, characterised in that in the memory (MEM) there are stored a predefinable number of deceleration regions (A, B, C, D) each associated with respective elongate edges of a model at which the profile suddenly changes, each such deceleration region being defined between parallel planes perpendicular to the XY plane and parallel planes perpendicular to the YZ plane, the respective deceleration regions being defined in the memory (MEM) by the X and Z coordinates of boundary points of these regions corresponding to predetermined Y coordinate values, and wherein at each tracing pass having a detected Y coordinate value which lies between two of the predetermined Y coordinates corresponding to stored boundary points for one of the deceleration regions stored in the memory, the control unit will provide for that pass X and Z coordinates, defining a deceleration portion of that pass, by interpolating between respective X and respective Z coordinates for each boundary of the deceleration region in which that pass is taking place, using as the basis for each interpolation calculation the position of the detected Y coordinate of that pass relative to the difference between the two predetermined Y coordinates between which it lies.

### Patentanspruch

Kopiersteuersystem, das das Aufspüren eines Punktes einer plötzlichen Änderung im Profil eines Modells bei einer Suchgeschwindigkeit ausführt, die in einem Verzögerungsbereich vor dem Punkt der plötzlichen Änderung verringert ist, mit einer Steuereinheit (CPU), einem Speicher (MEM), der in sich vorgespeichert Koordinaten in drei Dimensionen X, Y, Z enthält, die einen Verzögerungsbereich angeben, und X-, Y- u. Z-Achsen-Positionserfassungsmitteln (PCX, PCY, PCZ), die ermöglichen, daß der Suchlauf in Abhängigkeit von einem Vergleich zwischen gespeicherten und erfaßten Suchweg - Koordinatenwerten gesteuert wird, wobei die Steuereinheit betreibbar ist, um Suchläufe parallel zu der XZ-Ebene auszuführen, um dadurch eine konstante Y-Koordinate vollständig über jeden Lauf hinweg zu haben und dem die X- u. Z-Koordinaten des Verzögerungsbereiches während eines Suchlaufs in Abhängigkeit von der erfaßten Y-Koordinate des Suchweges zu bewerten, dadurch gekennzeichnet, daß in dem Speicher (MEM) eine vordefinierbare Anzahl von Verzögerungsbereichen (A, B, C, D) gespeichert ist, die jeweils jeweiligen langen Kanten eines Modells zugeordnet sind, bei denen sich das Profil plötzlich ändert, jeder derartige Verzögerungsbereich zwischen parallelen Ebenen senkrecht zu der XY-Ebene und parallelen Ebenen senkrecht zu der YZ-Ebene definiert ist, die jeweiligen Verzögerungsbereiche in dem Speicher (MEM) durch die X- u. Z-Koordinaten von Grenzpunkten dieser Bereiche, welche mit vorbestimmten Y-Koordinatenwerten korrespondieren, definiert sind und wobei bei jedem Suchweg, der einen erfaßten Y-Koordinatenwert hat, welcher zwischen zwei der vorbestimmten Koordinaten liegt, die mit den gespeicherten Grenzpunkten für einen der Verzögerungs-bereiche korrespondieren, welcher in dem Speicher gespeichert sind, die Steuereinheit für diesen Weg X- u. Z-Koordinaten bereitstellt, die einen Verzögerungsbereich des Weges durch Interpolieren zwischen jeweiligen X- u. jeweiligen Z-Koordinaten für jede Grenze des Verzögerungsbereiches, in dem der Lauf stattfindet, definiert, wobei sie als die Grundlage für jede Interpolationsberechnung die Position der erfaßten Y-Koordinate dieses Weges relativ zu der Differenz zwischen den zwei vorbestimmten Y-Koordinaten, zwischen denen sie liegt, benutzt.

### Revendication

Un système de commande de copiage qui accomplit le copiage d'un point de changement brusque dans le profil d'un modèle avec une vitesse de copiage réduite, dans une région de décélération qui précède le point de changement brusque, comprenant une unité de commande (CPU), une mémoire (MEM) dans laquelle sont pré-enregistrées des coordonnées dans les trois dimensions X, Y et Z, indiquant une région de décélération, et des moyens de détection de position selon les axes X, Y et Z (PCX, PCY, PCZ) permettant de commander le copiage sous la dépendance d'une comparaison entre des valeurs de coordonnées de copiage enregistrées et détectées, l'unité de commande étant capable d'accomplir des passes de copage parallèlement au plan XZ, de façon à avoir une coordonnée Y constante sur toute la longueur de chaque passe, et d'évaluer les coordonnées X et Z d'une région de décélération pendant une passe de copiage, sous la dépendance de la coordonnée Y détectée de la passe de copiage, caractérisé en ce qu'un nombre prédéfini de régions de décélération (A, B, C, D) sont enregistrées dans la mémoire (MEM), chacune de ces régions étant associée à des bords allongés respectifs d'un modèle auxquels le profile change brusquement, chaque région de décélération étant définie entre des plans parallèles qui sont perpendiculaires au plan XY et entre des plans parallèles qui sont perpendiculaires au plan YZ, les régions de décélération respectives étant définies dans la mémoire (MEM) par les coordonnées X et Z des points limites de ces régions, correspondant à des valeurs de coordonnées prédéterminées, et en ce que, dans chaque passe de copiage ayant une valeur de coordonnée Y détectée qui est comprise entre deux des coordonnées Y prédéterminées corres-pendant à des points limites enregistrés pour les régions de décélération qui sont enregistrées dans la mémoire, l'unité de commande fournit pour cette passe des coordonées X et Z définissant une partie de décélération de cette passe, par interpolation entre des coordonnées X respectives et Z respectives pour chaque limite de la région de décéleration dans laquelle cette passe a lieu, en utilisant comme base pour chaque calcul d'interpolation, la position de la coordonnée Y détectée de cette passe, par rapport à la différence entre les deux coordonnées Y prédéterminées entre lesquelles elle se trouve.

FIG. 1

0 080 513

# FIG. 2

# FIG. 3

| REGION | Y-AXIS | POINT | X-AXIS | Z-AXIS | POINT | X-AXIS | Z-AXIS |
|---|---|---|---|---|---|---|---|
| A | $Y_1$ | $A_1$ | $X_{A1}$ | $Z_{A1}$ | $A'_1$ | $X_{A'1}$ | $Z_{A'1}$ |
| | $Y_2$ | $A_2$ | $X_{A2}$ | $Z_{A2}$ | $A'_2$ | $X_{A'2}$ | $Z_{A'2}$ |
| | $Y_3$ | $A_3$ | $X_{A3}$ | $Z_{A3}$ | $A'_3$ | $X_{A'3}$ | $Z_{A'3}$ |
| ·B | $Y_1$ | $B_1$ | $X_{B1}$ | $Z_{B1}$ | $B'_1$ | $X_{B'1}$ | $Z_{B'1}$ |
| | $Y_2$ | $B_2$ | $X_{B2}$ | $Z_{B2}$ | $B'_2$ | $X_{B'2}$ | $Z_{B'2}$ |
| | $Y_3$ | $B_3$ | $X_{B3}$ | $Z_{B3}$ | $B'_3$ | $X_{B'3}$ | $Z_{B'3}$ |
| C | $Y_1$ | $C_1$ | $X_{C1}$ | $Z_{C1}$ | $C'_1$ | $X_{C'1}$ | $Z_{C'1}$ |
| | $Y_3$ | $C_2$ | $X_{C2}$ | $Z_{C2}$ | $C'_2$ | $X_{C'2}$ | $Z_{C'2}$ |
| D | $Y_1$ | $D_1$ | $X_{D1}$ | $Z_{D1}$ | $D'_1$ | $X_{D'1}$ | $Z_{D'1}$ |
| | $Y_3$ | $D_2$ | $X_{D2}$ | $Z_{D2}$ | $D'_2$ | $X_{D'1}$ | $Z_{D'2}$ |